# FASCICULE DE BREVET EUROPEEN

(11) **EP 3 162 631 B1**
(45) Date de publication et mention de la délivrance du brevet: **25.11.2020**
(21) Numéro de dépôt: 16196068.7
(22) Date de dépôt: 27.10.2016
(51) Int. Cl.: B60P 7/15

(54) **BARRE D'ARRIMAGE À DOUBLE MOYEN DE RAPPEL ET PROCÉDÉ D'INSTALLATION CORRESPONDANT**
LADUNGSSICHERUNGSSTANGE MIT DOPPELTEM FEDERUNGSMITTEL, UND ENTSPRECHENDES EINBAUVERFAHREN
TIE-DOWN BAR WITH DOUBLE BIASING MEANS AND CORRESPONDING INSTALLATION METHOD

(30) Priorité: 27.10.2015 FR 1560261
(43) Date de publication de la demande: 03.05.2017
(73) Titulaire: Ack Forankra, 69780 Mions (FR)
(72) Inventeur: BIAUD, Richard, 69800 SAINT PRIEST (FR); VACAS RUIZ, Angel, 08859 BARCELONE (ES)
(74) Mandataire: Vidon Brevets & Stratégie

(56) Documents cités:
- WO-A1-2015/034424
- DE-A1- 3 901 412
- US-A- 4 023 819
- US-A1- 2014 133 899
- US-A1- 2014 369 782
- US-B1- 6 368 037

## Description

### 1. Domaine de l'invention

Le domaine de l'invention est celui de l'arrimage et/ou du maintien de charge pour le transport, notamment le transport dans des caissons fermés (semi-remorques, fourgons, véhicules utilitaires légers, etc.).

L'invention concerne plus spécifiquement les barres d'arrimage amovibles, destinées à être mise en position entre deux surfaces d'appui d'un véhicule, et en particulier la mise en place de telles barres.

### 2. Art antérieur

Les dispositifs d'arrimage sont classiquement utilisés dans le domaine des transports afin de maintenir une charge ou un ensemble de charges installés dans un caisson de véhicule (semi-remorques, fourgons, etc.) au cours du déplacement du véhicule. Il existe d'une part des dispositifs d'arrimage souples, comme les filets, sangles ou encore tendeurs, et d'autre part des systèmes d'arrimage rigides, à savoir les barres et autres poutres d'arrimage.

Les barres d'arrimage peuvent être utilisées à la verticale ou à l'horizontale, placées entre deux parois. Le plus souvent, les barres sont installées entre deux surfaces rigides horizontales (par exemple le sol et le plafond du caisson du véhicule) et placées contre une ou plusieurs charges de manière à empêcher tout mouvement longitudinal ou latéral ou tout renversement de ces charges, notamment s'il s'agit de charges hautes ou de plusieurs charges superposées, lors des manœuvres du véhicule (accélération, freinage, virage, etc).

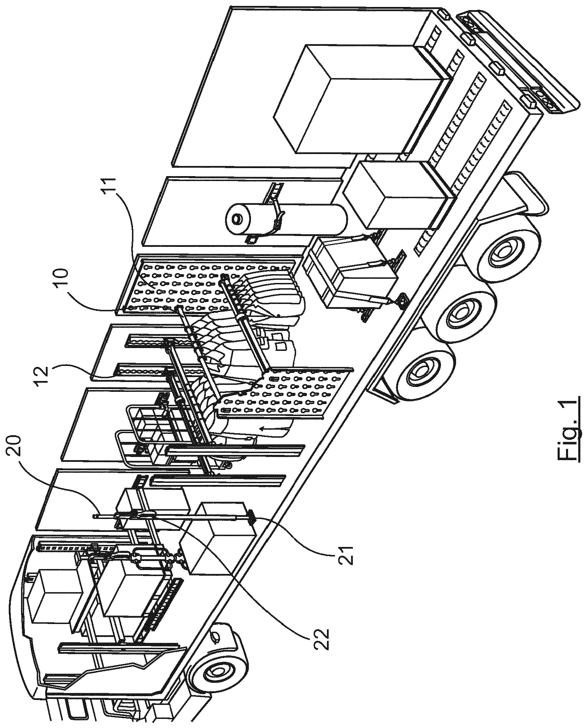

On connaît notamment deux types de barres d'arrimage: les barres munies d'embouts aptes à coopérer avec des rails, et les barres munies de patins ne nécessitant pas de tels rails. Les deux types de barres d'arrimage sont illustrés sur la **figure 1****,** qui présente plus généralement différents moyens d'arrimage d'objets ou de charges. Dans le premier cas (illustré ici dans une application porte-vêtements, mais le principe de mise en œuvre est le même pour une barre d'arrimage), les embouts sont donc adaptés pour être reçus par des rails à orifices 11, 12 installés spécifiquement à cet effet dans le véhicule. La mise en place d'une barre à embouts 10 est simple. L'utilisateur effectue un réglage initial de la longueur de la barre de façon à ce qu'elle soit légèrement supérieure à la distance entre les deux parois. Une fois la première extrémité de la barre en position dans un orifice du rail, l'utilisateur comprime un segment haut de la barre par l'intermédiaire d'un ressort, de manière à placer sa deuxième extrémité dans un orifice du rail opposé. Le maintien en position de la barre est effectué grâce au cisaillement de l'embout dans le rail.

Cependant, peu de véhicules sont équipés des rails adaptés. Et dans le cas des véhicules équipés, le nombre de rails installés au sol et au plafond est généralement limité (sinon nul), ce type de barres étant surtout montés sur des parois verticales. Ceci réduit fortement les options de montage des barres d'arrimage à l'intérieur du caisson du véhicule, et ne permet pas un maintien optimal de certains chargements. En outre, ces barres à embout ne disposent généralement pas de moyens de verrouillage, permettant de garantir un bon maintien en place en toutes circonstances.

Dans le cas des barres d'arrimage à patins, les patins 21 sont placés directement contre les parois, et sont maintenus en position par mise en tension de deux éléments de la barre. Afin de mettre une barre à patins 20 en place, l'utilisateur effectue un réglage initial de sa longueur de façon à ce qu'elle soit légèrement inférieure à la distance entre les deux parois. Une fois le premier patin placé au sol, l'utilisateur réalise un ajustement « fin » en faisant coulisser un segment haut de la barre par rapport à un segment bas, de manière à ce que le deuxième patin entre en contact avec la paroi supérieure. Le coulissement est verrouillé par adjonction d'une forte compression, par exemple par action sur une poignée 22. L'intensité de la compression, qui est liée au coefficient de frottement des patins avec les parois du véhicule, définit l'efficacité du blocage de la barre. Une telle barre d'arrimage à patins est par ex. connue du document DE 39 01 412 A1.

Les barres à patins n'assurent donc pas un maintien optimal du chargement en toutes circonstances. En effet, l'intensité de compression, et donc l'efficacité du blocage de la barre, varient selon l'utilisateur qui met en place la barre. Ainsi, une force de blocage trop faible risque de ne pas assurer convenablement la sécurité du chargement transporté. Au contraire, une force de blocage trop forte risque de détériorer les parois du véhicule. De plus, durant la phase de réglage « fin » l'attention de l'utilisateur est davantage portée sur le verrouillage de la barre plutôt que son positionnement correct. Les barres à patins présentent également une ergonomie qui rend leur manipulation peu aisée par une seule personne : il est en effet nécessaire de tenir les deux éléments constitutifs de la barre, tout en agissant sur la poignée.

Enfin, les barres, qu'elles soient à embouts ou à patins, sont généralement entreposées sur le plancher du véhicule après utilisation au lieu d'être stockées convenablement. Elles sont même souvent « jetées » sur le sol par l'utilisateur cherchant à gagner du temps, l'opération de mise en place entre deux parois étant longue. Sur le long terme, le matériel subit des dégradations. De plus, ceci augmente la pénibilité de l'installation, puisqu'il est nécessaire de se baisser pour saisir la barre pour l'utilisation suivante.

Il serait donc souhaitable de disposer de barres d'arrimage qui soient simples et rapides d'utilisation, et dont la mise en place ne dépende pas du type de véhicule et de son aménagement intérieur.

Il serait également souhaitable que ces barres d'arrimage présentent une capacité de blocage maîtrisée, de manière à garantir un maintien optimal du chargement.

Enfin, il serait également souhaitable que ces barres d'arrimage puissent être déplacées très rapidement d'un emplacement à un autre, en vue d'un stockage efficace et respectueux du matériel et de la santé des utilisateurs.

### 3. Résumé

La présente invention a pour objectif de pallier ces inconvénients de l'art antérieur.

Ces objectifs, ainsi que d'autres qui apparaîtront pas la suite, sont atteints à l'aide d'une barre d'arrimage destinée à s'étendre entre deux surfaces d'appui d'un véhicule, comprenant un arbre principal et un coulisseau de verrouillage mobile en translation par rapport audit arbre principal et associé à des premiers moyens de rappel, dits durs, et une poignée de verrouillage de la position dudit coulisseau de verrouillage par rapport audit arbre principal.

La barre d'arrimage, selon l'invention, comprend un second coulisseau, dit coulisseau de mise en place, mobile en translation par rapport audit arbre principal et associé à des seconds moyens de rappel, dits souples, la raideur desdits premiers moyens de rappel étant supérieure à la raideur desdits seconds moyens de rappel.

La barre d'arrimage comprend également des moyens de blocage de la translation dudit coulisseau de mise en place par rapport audit arbre principal.

Ainsi, la barre d'arrimage peut prendre deux positions :
- une position, d'installation, ou non bloquée, dans laquelle ledit second coulisseau peut être déplacé en translation par rapport audit arbre principal, pour permettre la mise en place de ladite barre d'arrimage, en comprimant lesdits seconds moyens de rappel ;
- une position bloquée, dans laquelle ledit second coulisseau est bloqué en translation par rapport audit arbre principal, permettant un verrouillage de ladite barre d'arrimage, en comprimant lesdits premiers moyens de rappel sous l'action de ladite poignée de verrouillage.

Une telle barre d'arrimage peut ainsi être mise en position de manière simple et rapide entre deux surfaces par un utilisateur, sans avoir recours à des rails ou à des emplacements spécifiques dans le véhicule. La barre peut être repositionnée autant de fois que nécessaire, à une seule main et en quelques mouvements, de manière à ajuster sa position par rapport aux charges. Une telle barre d'arrimage, une fois verrouillée, présente des capacités de blocage maitrisées (ni trop ni insuffisamment bloquée : la tension est sensiblement constante et prédéterminée) et garantit que les charges soient maintenues le plus surement possibles.

Dans la position non bloquée (ou, position d'installation, ou position de parking), l'action sur la longueur de la barre est aisée, et peut être effectuée d'une main placée sur le second coulisseau : un déplacement vers le bas (lorsque la barre d'arrimage est destinée à être montée verticalement et que sa base repose sur le sol) permet de réduire cette longueur, les seconds moyens de rappel étant souples. Une fois la barre ainsi mise en place, on bloque le coulissement entre le second coulisseau et l'arbre principal. Dans cette position bloquée, on assure classiquement le verrouillage final, en comprimant les premiers moyens de rappel.

Ceci est assuré à l'aide de la poignée de verrouillage. Les seconds moyens de rappel, indépendants de la poignée et montés à l'intérieur du second coulisseau ne doivent bien sûr pas être confondus avec un éventuel ressort solidaire de la poignée, qui ne sert pas à la mise en place aisée (position non bloquée) de la barre d'arrimage, mais assure une assistance au verrouillage, dans la position bloquée.

On comprend que la position bloquée correspond à la seule position disponible sur les barres d'arrimage connues, et que l'invention apporte en outre la position non bloquée, facilitant l'installation de la barre.

Selon un aspect de l'invention, lesdits moyens de blocage comprennent une platine de blocage pouvant prendre deux positions :
- une position d'installation, dans laquelle elle est libre en translation par rapport à une tige solidaire dudit arbre principal ;
- une position bloquée, dans laquelle elle est liée en translation à ladite tige.

L'utilisation d'une telle platine de blocage est un moyen efficace et simple à mettre en œuvre pour d'une part dissocier le mouvement du coulisseau de celui de l'arbre principal lors de l'étape de mise en place de la barre, et d'autre part lier le mouvement du coulisseau à celui de l'arbre principal lors de l'étape de verrouillage de la barre.

Selon un mode de réalisation particulier, ladite platine présente un logement, dont des bords intérieurs viennent en contact avec ladite tige dans ladite position de blocage.

Ceci permet de réaliser un arcboutement des bords intérieurs du logement contre la tige lors du passage de la position d'installation de la platine à sa position de blocage.

Selon différents modes de réalisation particuliers, ladite tige peut présenter une section carrée, rectangulaire ou circulaire.

Selon un mode de réalisation particulier, lesdits seconds moyens de rappel sont montés autour de ladite tige.

Selon un aspect de l'invention, le déplacement de ladite platine entre lesdites position d'installation et de blocage est contrôlé par ladite poignée de verrouillage, par l'intermédiaire d'un arbre de transmission d'effort.

La poignée peut former un bras de levier, permettant que l'utilisateur exerce un effort limité pour verrouiller la barre d'arrimage. L'arbre de transmission d'efforts permet quant à lui de transmettre efficacement l'effort exercée sur la poignée vers la platine, de manière à la faire pivoter contre la tige pour bloquer la translation de cette dernière. Le système de verrouillage fait ainsi intervenir peu d'éléments, pour une opération de verrouillage aisée et performante.

Selon un mode de réalisation particulier, ladite poignée de verrouillage est mobile en rotation par rapport à un axe solidaire dudit arbre principal entre une position déverrouillée et une position verrouillée, et assure deux fonctions successives :
- sur une première plage angulaire : déplacement de ladite platine de façon à la placer dans sa position de blocage ;
- sur une seconde plage angulaire : déplacement en translation de la tige sur laquelle ladite platine est bloquée, de façon à tendre lesdits premiers moyens de rappel.

Cette approche permet une manipulation simple, dans un seul mouvement, le déplacement complet de la poignée de verrouillage, sur l'intégralité de sa plage angulaire de mobilité, assurant le verrouillage de la barre d'arrimage. La course de la barre lors de l'opération de verrouillage est ainsi complètement connue et définie par le mouvement de la poignée. Ainsi, la barre d'arrimage fournit toujours la même force de blocage quels que soient l'utilisateur ou le véhicule.

Selon un mode de réalisation particulier, ledit arbre principal porte au moins une butée contre lequel ladite platine vient en appui, en l'absence de sollicitation sur lesdits seconds moyens de rappel.

La butée permet de créer un point d'appui pour la platine au moment de sa rotation autour de la tige (c'est-à-dire au moment de son passage en position de blocage).

Selon un aspect particulier de l'invention, lesdites butées comprennent deux goupilles traversantes.

Cette solution technique est simple à mettre en œuvre. Le fait de disposer de deux goupilles assure que la platine reste sensiblement horizontale en position d'installation et que son déplacement le long de la tige ne soit pas entravé à cause d'une mauvaise inclinaison de la platine (les risques d'arcboutement non voulus sont ainsi limités).

Selon un aspect particulier, lesdits moyens de rappel comprennent des ressorts hélicoïdaux.

Les ressorts hélicoïdaux sont simples à monter, et fiables dans leur utilisation comme moyen de rappel.

Selon un aspect particulier de l'invention, lesdits moyens de rappel souples comprennent deux ressorts, notamment deux ressorts hélicoïdaux, placés respectivement d'un côté et de l'autre de ladite platine.

Cette configuration à deux ressorts est simple à mettre en œuvre. Le ressort placé au-dessus de la platine de blocage garantit qu'une certaine course minimum soit disponible au dessus de la platine. Ainsi, la poignée de verrouillage peut notamment être manipulée lorsque la barre n'est pas mise en position (donc non immobilisée entre deux parois), par exemple pour une démonstration à vide.

Selon un mode de réalisation particulier, ledit coulisseau de mise en place comprend des moyens de préréglage de sa longueur.

Ceci permet que la longueur totale de la barre soit préréglée avant sa mise en position. En particulier, la longueur de la barre peut être préréglée de façon à être légèrement supérieure à la distance entre les deux parois.

Selon un aspect particulier de l'invention, ledit coulisseau de mise en place est constitué de deux parties télescopiques.

La longueur du coulisseau peut ainsi facilement être réglée en déplaçant les parties télescopiques l'une par rapport à l'autre.

Selon un aspect particulier, ladite barre porte à chacune de ses extrémités un patin antidérapant ou un embout destiné à coopérer avec un rail.

Le maintien en position des extrémités de la barre contre chacune des parois est ainsi optimisé.

L'invention concerne également un procédé d'installation d'une barre d'arrimage destinée à s'étendre entre deux surfaces d'appui d'un véhicule, comprenant les étapes suivantes :
- installation de ladite barre d'arrimage entre lesdites surfaces d'appui, en agissant sur un second coulisseau, dit coulisseau de mise en place, mobile en translation par rapport à un arbre principal et associé à des seconds moyens de rappel, dits souples ;
- blocage de la translation dudit coulisseau de mise en place par rapport audit arbre principal ;
- verrouillage de ladite barre d'arrimage, en agissant sur un coulisseau de verrouillage mobile en translation par rapport audit arbre principal et associé à des premiers moyens de rappel, dits durs, et une poignée de verrouillage de la position dudit coulisseau de verrouillage par rapport audit arbre principal,
la raideur desdits premiers moyens de rappel étant supérieure à la raideur desdits seconds moyens de rappel.

Selon un aspect particulier, lesdites étapes de blocage et de verrouillage sont assurées par le déplacement d'une unique poignée.

### 4. Liste des figures

D'autres caractéristiques et avantages de l'invention apparaîtront plus clairement à la lecture de la description suivante d'un mode de réalisation de l'invention, donnée à titre d'exemples illustratifs et non limitatifs, au regard des dessins annexés parmi lesquels :
- la **figure 1** représente l'aménagement de l'intérieur d'une semi-remorque à l'aide de barres d'arrimage à embouts horizontales, et de barres d'arrimage à patins verticales, afin de maintenir des charges selon l'art antérieur ;
- les **figures 2A à 2C** représentent la barre d'arrimage dans son ensemble, les éléments participant à son préréglage en hauteur, et les éléments participant à sa mise en place et à son verrouillage :

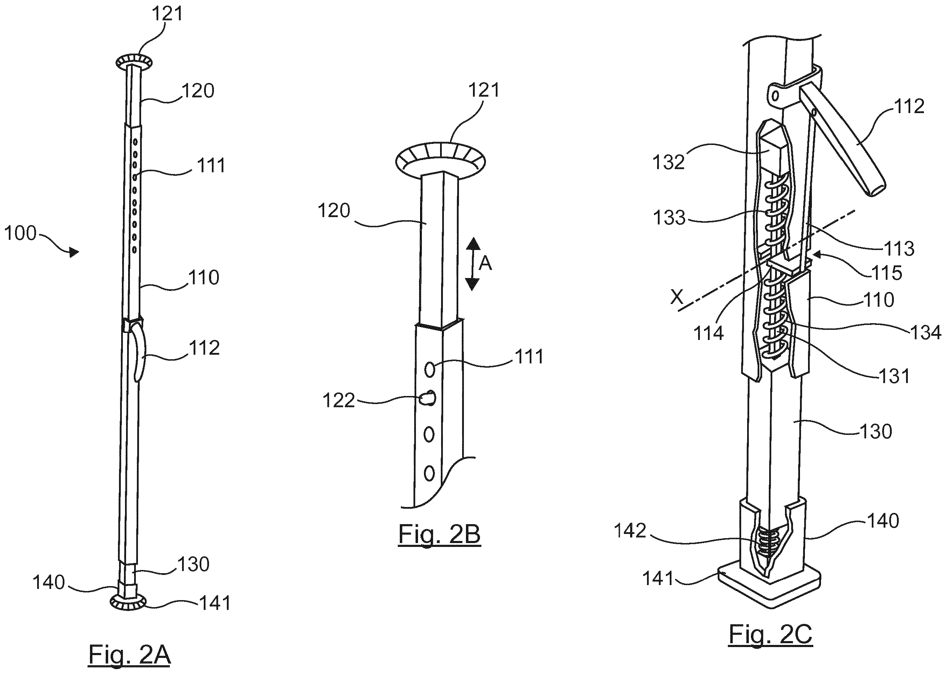

   - **figure 2A** **:** barre d'arrimage ;
   - **figure 2B** : éléments de préréglage en hauteur de la barre ;
   - **figure 2C** **:** éléments de mise en place de la barre (notamment deux ressorts « souples »), et de verrouillage de la barre (notamment un ressort « dur ») ;

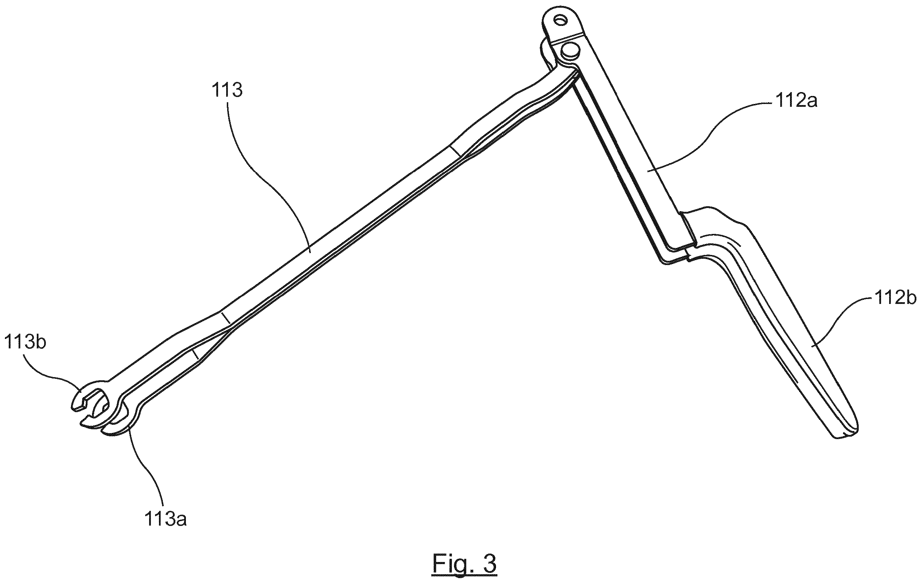

- la **figure 3** illustre la poignée de verrouillage et l'arbre de transmission d'efforts, permettant d'initier le verrouillage de la barre d'arrimage ;

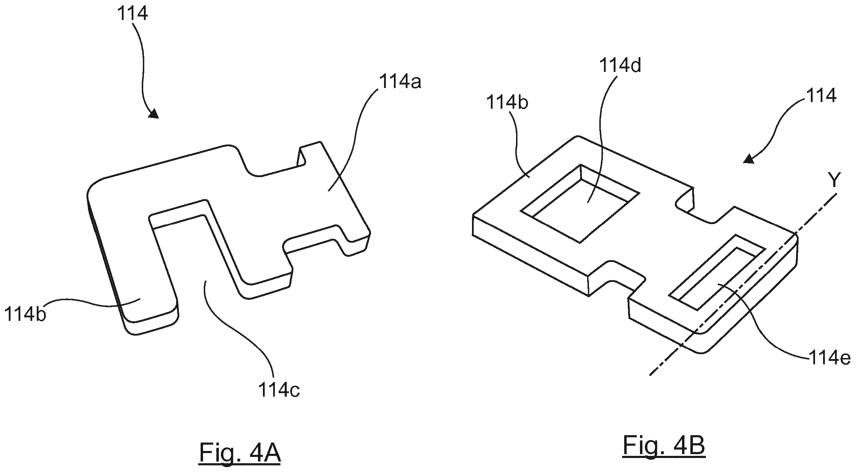

- les **figures 4A et 4B** représentent une platine de blocage de la translation du coulisseau mise en place par rapport à l'arbre principal, selon deux variantes ;

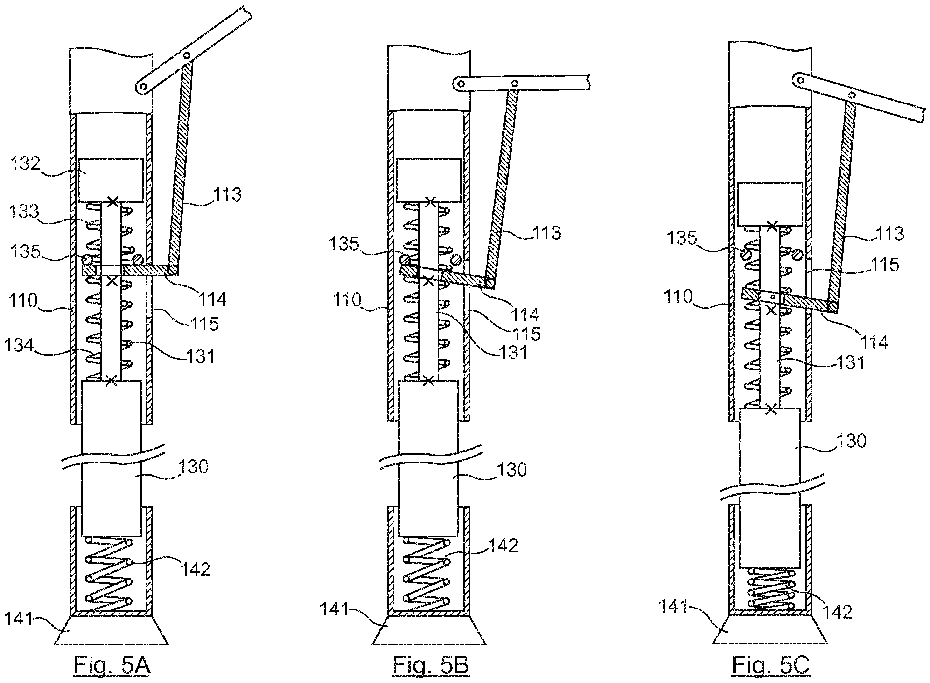

- les **figures 5A à 5C** schématisent les différentes étapes du verrouillage de la barre, et en particulier le fonctionnement de la platine de blocage :
   - **figure 5A** **:** platine en position d'installation (c'est-à-dire libre en translation par rapport à une tige solidaire de l'arbre principal) avant actionnement de la poignée ;
   - **figure 5B** **:** platine en position de blocage (c'est-à-dire liée en translation à la tige) dans une première phase d'actionnement de la poignée ;
   - **figure 5C** **:** translation de la platine en position de blocage et compression du ressort « dur », dans une deuxième phase d'actionnement de la poignée ;

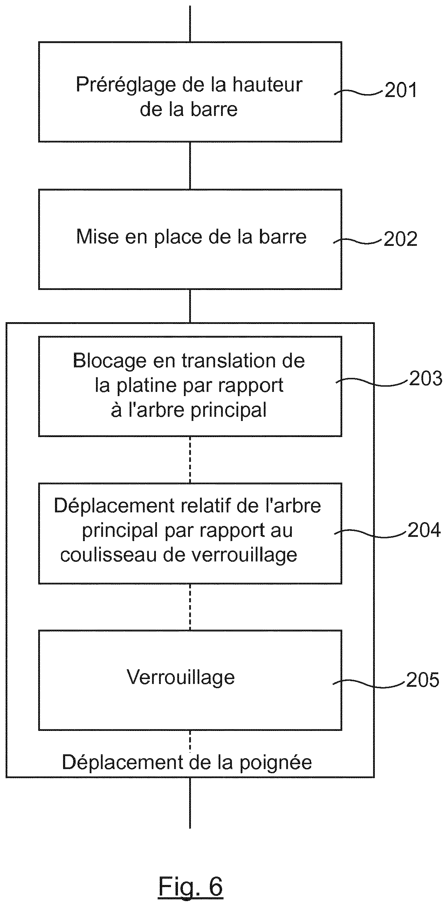

- la **figure** 6 illustre les étapes du procédé d'installation de la barre d'arrimage.

### 5. Description détaillée de différents modes de réalisation de l'invention

### 5.1 Principe général

Le principe général de l'invention repose sur une nouvelle approche du maintien d'un chargement à l'aide d'une barre d'arrimage de charges. Dans le mode de réalisation décrit ci-après, l'invention est mise en œuvre sur une barre à patins. La même approche peut également être mise en œuvre sur une barre à embouts, aptes à coopérer avec des rails prévus à cet effet, pour assurer le verrouillage de la barre une fois montée entre les rails, voire sur une barre « mixte », comprenant un embout à une extrémité et un patin à l'autre.

Plus précisément, l'invention concerne une barre d'arrimage de charges comprenant un arbre principal par rapport auquel coulissent deux éléments, associés chacun à des moyens de rappel, par exemple des ressorts hélicoïdaux, de raideurs différentes et adaptées :
- d'une part un premier élément coulissant est associé à des moyens de rappel « souples » ;
- d'autre part un second élément coulissant est associé à des moyens de rappel « durs », qui présentent une raideur supérieure aux moyens de rappel « souples ».

Grâce à cette structure de barre spécifique à doubles moyens de rappel, il est possible d'installer la barre en deux temps entre les parois d'un véhicule.

Dans un premier temps (installation), la barre est mise en place entre les surfaces d'appui. Pour cela l'utilisateur déplace en translation le premier élément coulissant par rapport à l'arbre principal, en actionnant les moyens de rappel « souples », sans que les moyens de rappel « durs » soient comprimés. Ceci a pour effet de réduire la hauteur totale de la barre. Cette installation de la barre ne nécessite pas l'application d'une force importante, et peut par exemple être assurée à l'aide d'une seule main. Ainsi, l'utilisateur peut facilement mettre en place d'une main la barre.

Dans un second temps (verrouillage), la barre est verrouillée en position. Pour cela l'utilisateur déplace en translation le second élément coulissant par rapport à l'arbre principal, et actionne les moyens de rappel « durs », à l'aide d'une poignée de verrouillage qu'il manipule de sa seconde main. Dans cette phase de verrouillage, le deuxième élément coulissant (et les moyens de rappel « souples ») sont bloqués en translation. Ce verrouillage de la barre nécessite l'application d'une force toujours identique d'une fois sur l'autre, puisque les moyens de rappel « durs » n'ont pas été « pré-comprimés » pendant le premier temps.

On comprend que, selon l'invention, la barre peut se trouver, lorsqu'elle est placée entre deux parois de véhicule, dans deux états successifs.

Dans un premier état d'installation, ou de mise en place, la barre est mise en place entre les parois du véhicule, mais n'est pas verrouillée. L'action des moyens de rappel « souples» suffit à exercer une pression suffisante sur les parois pour maintenir la barre en position.

Dans un second état, verrouillée, la barre est verrouillée en position entre les parois du véhicule. Les moyens de rappel « durs » sont comprimés ce qui a pour effet d'augmenter la pression exercée sur les parois du véhicule. La barre ne peut plus être déplacée sans qu'elle soit déverrouillée.

La désinstallation se fait de façon symétrique. La poignée permet de passer de l'état verrouillé à l'état d'installation, dans lequel la barre reste maintenue entre les deux parois, grâce aux seconds moyens de rappel et au second coulisseau. D'une main, l'opérateur peut agir sur le second coulisseau et comprimer les seconds moyens de rappel, pour retirer la barre d'arrimage.

### 5.2 Glossaire

- 100 :: barre d'arrimage ;
- 110 :: tube principal du coulisseau de mise en place ;
- 111 :: lumières ;
- 112 :: poignée de verrouillage ;
- 112a :: bras de levier de la poignée ;
- 112b :: manche de la poignée ;
- 113 :: arbre de transmission d'efforts ;
- 114 :: platine de blocage ;
- 114a :: première extrémité de la platine ;
- 114b :: seconde extrémité de la platine ;
- 114c :: section en U de la platine ;
- 114d et 114e :: première et seconde cavités de la platine ;
- 115 :: ouverture ;
- 120 :: tube de préréglage du coulisseau de mise en place ;
- 121 ; 141 :: patins antidérapants ;
- 122 :: ergot de verrouillage ;
- 130 :: arbre principal ;
- 131 :: tige ;
- 132 :: élément de guidage ;
- 133 ; 134 :: ressorts hélicoïdaux « souples » ;
- 135 :: goupille traversante ;
- 140 :: coulisseau de verrouillage ;
- 142 :: ressort hélicoïdal « dur ».

### 5.3 Eléments constitutifs de la barre d'arrimage

La barre d'arrimage 100, telle que représentée sur la **figure 2A****,** comporte un arbre principal 130 par rapport auquel un coulisseau de mise en place peut être déplacé en translation. Ce coulisseau de mise en place est télescopique et constitué de deux éléments assemblés en translation : d'une part un tube principal 110 et d'autre part un tube de préréglage 120.

Les éléments constitutifs du coulisseau de mise en place sont représentés sur la **figure 2B****.** Le tube principal 110, creux et de section carrée dans ce mode de réalisation, est muni dans sa partie supérieure d'une série de lumières 111 régulièrement espacées. Le tube de préréglage 120, également de section externe carrée, comporte quant à lui un ergot de verrouillage 122 (ou une lumière traversée d'une goupille de verrouillage). L'ergot (ou la goupille) de verrouillage est adapté pour coopérer avec une des lumières du tube principal 110, de façon à verrouiller la translation (double flèche A) du tube de préréglage 120 par rapport au tube principal 110.

Le coulisseau de mise en place présente donc une longueur variable grâce au coulissement des deux éléments qui le constituent, permettant ainsi de prérégler la hauteur de la barre d'arrimage. Le préréglage en hauteur permet de fixer la hauteur de la barre d'arrimage 100 à une dimension légèrement supérieure à la distance entre les deux surfaces d'appui du véhicule

Le tube de préréglage 120 est par ailleurs coiffé d'un patin 121 par exemple en caoutchouc, présentant une surface antidérapante. Comme mentionné précédemment, dans un mode de réalisation alternatif, la barre peut également être munis de deux embouts pour rails (le tube de préréglage 120 est donc coiffé d'un embout pour rail au lieu d'être coiffé d'un patin 121). Une barre d'arrimage apte à coopérer avec des rails, selon ce mode de réalisation alternatif, peut être verrouillée en position, contrairement aux barres à embout de l'art antérieur. Il peut également être envisagé que la barre dispose d'éléments d'extrémités démontables, pour y placer en fonction des besoins des patins ou des embouts pour rails.

Comme illustré sur les **figures 2A et 2C****,** une poignée de verrouillage 112 est montée pivotante sur le coulisseau de mise en place (et plus particulièrement son tube principal 110), par exemple à mi-hauteur de la barre d'arrimage, de façon qu'elle soit aisée à manipuler.

Le coulisseau de mise en place 110, 120 coulisse autour d'un arbre principal 130 présentant, dans ce mode de réalisation, une section externe carrée. Le mécanisme interne de translation met en œuvre des ressorts « souples » 133, 134, autorisant un coulissement d'une seule main, dont le fonctionnement est décrit plus loin, en lien avec les **figures 5A à 5C** (paragraphe 5.5).

L'arbre 130 peut également être déplacé en translation par rapport, et ici à l'intérieur, d'un autre coulisseau coiffé d'un patin 141, dit coulisseau de verrouillage 140. Dans le mode de réalisation illustré, le coulisseau de verrouillage présente également une section interne carrée.

L'arbre et les coulisseaux de l'invention peuvent présenter d'autres sections, par exemple rondes ou rectangulaires, pourvu que les différentes opérations de translation soient respectées.

La **figure 2C** schématise les éléments participant à la mise en position de la barre, et ceux participant à son verrouillage.

La poignée 112, fixée en rotation sur une des parois latérales du tube principal 110 du coulisseau de mise en place, est liée en rotation à un arbre de transmission d'efforts 113. Un mode de réalisation de ces deux éléments est représenté sur la **figure 3****.** Selon ce mode de réalisation, la poignée présente un bras de levier 112a en surplomb duquel se trouve le manche de la poignée 112b. Cette structure ergonomique de poignée facilite le placement des doigts et permet à l'utilisateur de saisir correctement la poignée. L'arbre de transmission 113 se sépare en deux branches inférieures parallèles 113a, 113b adaptées pour coopérer avec un axe d'une platine de blocage 114, de manière à être mobile en rotation par rapport à la platine 114. Toute autre structure d'arbre de transmission permettant une rotation aisée de l'arbre de transmission par rapport à la platine 114 peut être utilisée.

La platine de blocage 114 est ainsi elle-même mobile, sous l'action de la poignée 112, autour d'un axe X perpendiculaire à l'axe principal de la barre d'arrimage (c'est-à-dire l'axe défini par la longueur de l'arbre principal, ou encore l'axe de translation des différents éléments de la barre les uns par rapport aux autres).

Un mode de réalisation de cette platine est illustré sur la **figure 4A****.** La platine possède une première extrémité 114a en forme de « T » destinée à être montée en rotation à l'extrémité inférieure de l'arbre de transmission d'efforts 113. Elle possède une seconde extrémité 114b présentant une section en « U » 114c, ce « U » étant ouvert sur un côté de la platine (le « T » de la première extrémité 114a et le « U » de la deuxième extrémité 114b sont ainsi perpendiculaires).

La forme en « U » permet de faciliter le montage. Selon une variante illustrée sur la **figure 4B****,** la platine 114 pourrait comporter une cavité carrée 114d, ou encore circulaire (et plus généralement de toute forme permettant d'assurer la liaison avec l'arbre de transmission) à la place de la section en « U » 114c.

Ces éléments ont pour fonction d'assurer une liaison pivot avec l'arbre de transmission d'efforts 113. Dans un autre mode de réalisation, celui-ci peut être lié en rotation avec la platine 114 par l'intermédiaire d'un barreau comportant une deuxième cavité 114e, et selon un axe de rotation Y.

Les branches latérales de la section en « U » (respectivement les parois latérales des cavités carrée ou circulaire du mode de réalisation alternatif) de la platine viennent en contact avec une tige 131 à section carrée solidaire de l'arbre principal 130, la deuxième extrémité 114b de la platine étant à l'intérieur du tube principal 110 du coulisseau tandis que la première extrémité 114a (respectivement 114e) de la platine, reliée à la poignée, émerge du corps principal par une ouverture 115. La **figure 2C** présente la platine de blocage 114 mise en place.

Ainsi, la platine 114 peut prendre deux positions :
- une première position d'installation, dans laquelle la platine 114 est libre en translation par rapport à la tige de l'arbre principal 130 ; et
- une deuxième position de blocage dans laquelle la platine 114 bascule autour de l'axe X de façon à être liée à la translation de la tige de l'arbre principal 130. En particulier, dans la position de blocage, la platine 114 et l'arbre principal 130 forment un ensemble lié, mais mobile par rapport au coulisseau de verrouillage 140.

La tige 131 comporte dans sa partie supérieure un élément de guidage 132, qui coulisse à l'intérieur du tube principal 110 du coulisseau de mise en place. Par ailleurs, deux ressorts « souples » 133, 134 sont disposés autour de la tige 131, de part et d'autre de la platine de blocage 114. Un ressort « souple » selon l'invention présente une raideur comprise par exemple entre 10 daN et 25 daN. Dans un mode de réalisation alternatif, un unique ressort « souple » pourrait être utilisé.

Entre le fond du coulisseau de verrouillage 140 et l'arbre principal 130 est mis en place un ressort « dur » 142 contribuant à réaliser le verrouillage de la barre d'arrimage, comme décrit plus loin au paragraphe 5.5. Un ressort « dur » selon l'invention présente une raideur comprise par exemple entre 80 daN et 250 daN.

Dans un autre mode de réalisation, d'autres moyens de rappel, comme un vérin à gaz, pourraient être utilisés à la place ou en complément des ressorts 133, 134, 141.

La mise en place de la barre dans un véhicule peut comprendre une étape optionnelle de préréglage de la barre, permettant de s'adapter aux dimensions du véhicule, et deux étapes successives de mise en position de la barre et de verrouillage de la barre. On notera que chacune de ces étapes de mise en position et de verrouillage de la barre correspond respectivement à un état ou position d'équilibre de la barre, dans lesquels la barre est immobilisée entre les parois du véhicule sans que l'utilisateur n'ait à agir.

Ces étapes sont décrites à suivre.

### 5.4 Préréglage initial de la barre

En vue de l'arrimage d'un chargement à l'intérieur d'un caisson de véhicule (par exemple une semi-remorque, ou un camion de transport) au moyen d'une barre d'arrimage, l'utilisateur - le conducteur du véhicule par exemple - effectue un réglage initial, ou préréglage, permettant d'adapter la hauteur de la barre à la distance entre les deux parois du véhicule (étape 201 sur la **figure 6**).

En pratique, la hauteur de la barre est réglée de manière à être légèrement supérieure à la distance entre les deux parois.

Pour ce faire, l'utilisateur règle la longueur du coulisseau de mise en place en faisant coulisser le tube de préréglage 120 par rapport au tube principal 110, selon un mouvement de translation A indiqué sur la **figure 2B****.** L'ergot de verrouillage 122 monté sur le tube 120 se déploie alors successivement dans chacune des lumières 111, l'utilisateur l'actionnant manuellement (ou à l'aide d'un outil) pour le faire passer d'une lumière à une autre. Lorsque la hauteur désirée est atteinte (par exemple, un trou au-dessus de la distance effective entre les parois), l'ergot de verrouillage 122 est déployé à l'intérieur de la lumière, empêchant tout mouvement de translation additionnel.

Ce préréglage de la hauteur n'est en principe nécessaire qu'à la première installation de la barre dans le véhicule, et n'est plus modifié par la suite.

### 5.5 Mise en position de la barre

Une fois le préréglage effectué, la barre d'arrimage présente une hauteur légèrement supérieure à la dimension effective entre les deux parois. Afin de mettre en position la barre (étape 202 sur la **figure 6**), l'utilisateur positionne le patin 141 contre la première paroi (par exemple le plancher du véhicule), puis fait coulisser, par exemple d'une seule main, vers le sol, le coulisseau de mise en place (c'est-à-dire l'ensemble constitué par le tube principal 110, le tube de préréglage 120 et la platine 114).

Au cours de cette translation, l'arbre principal 130 (et donc l'élément de guidage 132 monté sur la tige 131) et le coulisseau de verrouillage 140 de la barre restent immobiles par rapport à la surface d'appui (par exemple le sol), la raideur du ressort « dur » 142 l'empêchant de se comprimer.

Le coulisseau de mise en place est ainsi guidé par l'élément de guidage 132 le long d'un axe virtuel correspondant à la longueur de la barre. La platine 114 est alors dans sa position d'utilisation : elle coulisse librement et perpendiculairement par rapport à la tige 131, venant ainsi comprimer le ressort « souple » inférieur 134. le ressort « souple » supérieur 133 est alors libre et suit le mouvement de translation de la platine 114.

Ce ressort supérieur 133 permet de conserver une course disponible au dessus de la platine 114 de manière que la poignée de verrouillage 112 puisse être manipulée lorsque la barre n'est pas mise en position (donc non immobilisée entre deux parois). La course disponible garantit également que la poignée puisse être manipulée lorsque la compression entre les deux parois est inférieure à la course de compression du ressort « dur» 142, de manière à éviter tout risque de blocage de la platine 114 et de détérioration des éléments de la barre d'arrimage (rupture de la poignée, flambage de l'arbre principal, détérioration des goupilles, etc.).

De préférence, la raideur interne des ressorts « souples » est assez faible de sorte que l'utilisateur puisse faire coulisser la barre d'une seule main.

L'utilisateur comprime ainsi la barre d'arrimage jusqu'à ce qu'elle présente une hauteur légèrement inférieure à la dimension entre les parois. Il relâche ensuite la pression exercée sur le coulisseau de mise en place 110, 120 afin que le patin supérieur 121 vienne en appui contre la deuxième paroi du véhicule (par exemple le plafond). Le coulisseau 120, 121 est automatiquement repoussé vers le haut sous l'action des deux ressorts « souples » 133, 134 cherchant à reprendre leur position d'équilibre initiale.

La simplicité d'usage du mécanisme de la barre permet qu'elle soit très simplement mise en position contre une charge ou un ensemble de charges, par un unique utilisateur, et repositionnée autant de fois que nécessaire en très peu de temps.

De cette manière, la barre peut également être rangée très facilement, lorsqu'elle n'est pas utilisée pour maintenir des charges, et stockée en position entre deux surfaces du véhicule plutôt que d'être « jetée » au sol.

Lorsque la barre est mise en place, elle est dans un premier état ou une première position d'équilibre, dans lequel elle est maintenue en place entre les parois.

### 5.6 Verrouillage de la barre

Le verrouillage en position de la barre, assurant le bon maintien du chargement, est réalisé par le biais de la poignée 112 qui permet de mettre en action un dispositif de verrouillage. Celle-ci est montée mobile en rotation autour d'un axe solidaire du second coulisseau.

Les différentes étapes du verrouillage de la barre d'arrimage sont décrites en lien avec les **figures 5A à 5C****.**

La **figure 5A** présente la barre de verrouillage en position « initiale », après qu'elle a été mise en position entre les deux surfaces d'appui du véhicule. La poignée 112 est alors relevée et la platine de blocage 114 est perpendiculaire à la tige 131. La platine est en butée sous une paire de goupilles 135 (ou tout autre type de butée adapté) fixées dans la largeur du corps principal 110, de part et d'autre de la tige 131.

L'utilisateur abaisse la poignée 112. Ce mouvement génère la rotation de la platine de blocage 114 autour de l'axe X, par l'intermédiaire de l'arbre de transmission d'efforts 113. La platine s'arcboute alors contre la goupille 135, autour de la tige 131, comme représenté **figure 5B****,** et bloque ainsi tout mouvement de translation du coulisseau de mise en place 110, 120 par rapport à la tige 131 (étape 203 sur la **figure 6**).

L'ensemble comprenant la platine 114, la tige 131, les ressorts souples 133, 134 et l'arbre principal 130 forme alors un ensemble fixe, dont la seule possibilité de mouvement est une translation par rapport au coulisseau de verrouillage 140, 141.

Ainsi, lorsque l'utilisateur continue à abaisser la poignée 112 (**figure 5C**), la platine 114 est repoussée vers le coulisseau de verrouillage 140, 141, jusqu'à buter contre la partie basse de l'ouverture 115.

Dans un même temps, la tige 131 et l'arbre principal 130 sont repoussés vers le patin 141 (vers le sol par exemple) et compriment le ressort « dur » 142 (étape 204 sur la **figure 6**).

La barre d'arrimage est verrouillée en position lorsque l'utilisateur finit d'abaisser la poignée 112 (étape 205 sur la **figure 6**). L'action du ressort « dur » 142 cherchant à reprendre sa position initiale exerce une pression suffisante sur la surface d'appui du patin 121, pour assurer efficacement le maintien de la barre. L'axe de poussée de l'arbre principal 130 est alors en arrière du point de pivot de la poignée 112 lorsque celle-ci est en position basse (donc verrouillée) : ainsi, la barre d'arrimage reste verrouillée en position.

La course de la barre lors de l'opération de verrouillage est complètement connue et définie par le mouvement de la poignée. Ainsi, la barre d'arrimage selon l'invention présente l'avantage de fournir toujours la même force de blocage quels que soient l'utilisateur ou le véhicule. Ainsi, l'arrimage du chargement est optimal.

Lorsque les marchandises doivent être déchargées, l'utilisateur replace la poignée en position initiale (vers le haut). Avantageusement, la barre d'arrimage reste en place et partiellement maintenue grâce à la faible force de blocage fournie par les ressorts « souples ». De cette manière l'opération de retrait de la barre peut se faire sans que les marchandises ne bougent.

Lorsque la barre est verrouillée, elle est donc dans un second état ou une seconde position d'équilibre, dans lequel elle est immobilisée sans que l'utilisateur n'ait à intervenir.

Ainsi, la barre d'arrimage 100 peut être installée en deux temps :
Dans un premier temps, d'installation, elle est mise en position puis immobilisée entre les deux parois du véhicule dans un premier état d'équilibre (dans cet état, l'utilisateur n'a pas à agir sur la barre pour qu'elle reste immobile). Durant cette étape de mise en position, seul les ressorts « souples » 133, 134 sont sollicités. Le ressort « dur » 142 n'est pas actionné du fait de sa raideur, supérieure celle des ressorts souples. La platine de blocage 114 est libre en translation autour de la tige de l'arbre principal 130. Cette installation est donc permise par le déplacement du second coulisseau par rapport à l'arbre principal, qui peut s'effectuer d'une seule main.

Dans un second temps, elle est bloquée, ou verrouillée, par l'action sur la poignée 113, puis immobilisée dans un second état d'équilibre. Durant cette étape de verrouillage, seul le ressort « dur » 142 est sollicité. Les ressorts « souples » 133, 134 sont immobilisés autour de la tige 131 de l'arbre principal 130 du fait de l'inclinaison de la platine de blocage. L'arbre principal 130 et le second coulisseau étant liés via la platine de blocage 114, ils forment un seul ensemble coulissant, par rapport au premier coulisseau.

## Revendications

1. Barre d'arrimage (100) destinée à s'étendre entre deux surfaces d'appui d'un véhicule, comprenant un arbre principal (130) et un coulisseau de verrouillage (140) mobile en translation par rapport audit arbre principal (130) et associé à des premiers moyens de rappel (142), dits durs, et une poignée de verrouillage (112) de la position dudit coulisseau de verrouillage (140) par rapport audit arbre principal (130), **caractérisée en ce qu'**elle comprend un second coulisseau, dit coulisseau de mise en place (110, 120), mobile en translation par rapport audit arbre principal (130) et associé à des seconds moyens de rappel (133, 134), dits souples,
la raideur desdits premiers moyens de rappel (142) étant supérieure à la raideur desdits seconds moyens de rappel (133, 134),
et des moyens de blocage de la translation dudit coulisseau de mise en place par rapport audit arbre principal (130), pouvant prendre deux positions :
- une position d'installation, ou non bloquée, dans laquelle ledit second coulisseau (110, 120) peut être déplacé en translation par rapport audit arbre principal (130), pour permettre la mise en place de ladite barre d'arrimage, en comprimant lesdits seconds moyens de rappel (133, 134) ;
- une position bloquée, dans laquelle ledit second coulisseau (110, 120) est bloqué en translation par rapport audit arbre principal (130), permettant un verrouillage de ladite barre d'arrimage, en comprimant lesdits premiers moyens de rappel (142) sous l'action de ladite poignée de verrouillage (112).

2. Barre d'arrimage (100) selon la revendication 1, **caractérisée en ce que** lesdits moyens de blocage comprennent une platine de blocage (114) pouvant prendre deux positions :
- une position d'installation, dans laquelle elle est libre en translation par rapport à une tige solidaire (131) dudit arbre principal (130);
- une position bloquée, dans laquelle elle est liée en translation à ladite tige (131).

3. Barre d'arrimage (100) selon la revendication 2, **caractérisée en ce que** ladite platine de blocage (114) présente un logement, dont des bords intérieurs viennent en contact avec ladite tige (131) dans ladite position de blocage.

4. Barre d'arrimage (100) selon l'une quelconque des revendications 2 et 3, **caractérisée en ce que** le déplacement de ladite platine de blocage (114) entre lesdites position d'installation et de blocage est contrôlé par ladite poignée de verrouillage (112), par l'intermédiaire d'un arbre de transmission d'effort (113).

5. Barre d'arrimage (100) selon l'une quelconque des revendications 2 à 4, **caractérisée en ce que** lesdits seconds moyens de rappel (133, 134) sont montés autour de ladite tige (131).

6. Barre d'arrimage (100) selon l'une quelconque des revendications 2 à 5, **caractérisée en ce que** lesdits seconds moyens de rappel (133, 134) comprennent deux ressorts s'étendant respectivement de part et d'autre de ladite platine de blocage (114).

7. Barre d'arrimage (100) selon l'une quelconque des revendications 2 à 6, **caractérisée en ce que** ladite poignée de verrouillage (112) est mobile en rotation par rapport à un axe solidaire dudit second coulisseau (110, 120) entre une position déverrouillée et une position verrouillée, et assure deux fonctions successives :
- sur une première plage angulaire : déplacement de ladite platine (114) de façon à la placer dans sa position de blocage ;
- sur une seconde plage angulaire : déplacement en translation de la tige sur laquelle ladite platine (114) est bloquée, de façon à tendre lesdits premiers moyens de rappel (142).

8. Barre d'arrimage (100) selon l'une quelconque des revendications 2 à 7, **caractérisée en ce que** ledit arbre principal (130) porte au moins une butée (135) contre laquelle ladite platine (114) vient en appui, en l'absence de sollicitation sur lesdits seconds moyens de rappel (133, 134).

9. Barre d'arrimage (100) selon la revendication 8, **caractérisée en ce que** lesdites butées comprennent deux goupilles traversantes.

10. Barre d'arrimage (100) selon l'une quelconque des revendications 1 à 9, **caractérisée en ce que** lesdits premiers et seconds moyens de rappel (133, 134, 142) sont coaxiaux et s'étendent à l'intérieur des premier et second coulisseaux respectivement.

11. Barre d'arrimage (100) selon l'une quelconque des revendications 1 à 10, **caractérisée en ce que** lesdits premiers et seconds moyens de rappel (133, 134, 142) comprennent des ressorts hélicoïdaux.

12. Barre d'arrimage (100) selon l'une quelconque des revendications 1 à 11, **caractérisée en ce que** ledit coulisseau de mise en place (110, 120) comprend des moyens de préréglage de sa longueur.

13. Barre d'arrimage (100) selon les revendications 1 à 11, **caractérisée en ce qu'**elle porte à chacune de ses extrémités un patin (212, 141) antidérapant ou un embout destiné à coopérer avec un rail.

## Patentansprüche

1. Ladungssicherungsstange (100), die dazu bestimmt ist, sich zwischen zwei Auflageoberflächen eines Fahrzeugs zu erstrecken, die eine Hauptwelle (130) und einen Verriegelungsstößel (140) umfasst, der in Verschiebung in Bezug auf die Hauptwelle (130) beweglich und mit ersten Federungsmitteln (142), die hart genannt werden, assoziiert ist, und mit einem Griff (112) zum Verriegeln der Position des Verriegelungsstößels (140) in Bezug auf die Hauptwelle (130),
**dadurch gekennzeichnet, dass** sie einen zweiten Stößel umfasst, Anbringungsstößel (110, 120) genannt, der in Verschiebung in Bezug auf die Hauptwelle (130) beweglich und mit zweiten Federungsmitteln (133, 134), die weich genannt werden, assoziiert ist,
wobei die Steifigkeit der ersten Federungsmittel (142) größer ist als die Steifigkeit der zweiten Federungsmittel (133, 134),
und Blockierungsmittel der Verschiebung des Anbringungsstößels in Bezug auf die Hauptwelle (130), die zwei Positionen einnehmen können:
- eine Einbauposition oder nicht blockierte Position, in der der zweite Stößel (110, 120) in Verschiebung in Bezug auf die Hauptwelle (130) verlagert werden kann, um das Anbringen der Ladungssicherungsstange zu erlauben, indem die zweiten Federungsmittel (133, 134) komprimiert werden;
- eine blockierte Position, in der der zweite Stößel (110, 120) in Verschiebung in Bezug auf die Hauptwelle (130) blockiert ist, indem ein Verriegeln der Ladungssicherungsstange erlaubt wird, indem die ersten Federungsmittel (142) unter der Einwirkung des Verriegelungsgriffs (112) komprimiert werden.

2. Ladungssicherungsstange (100) nach Anspruch 1, **dadurch gekennzeichnet, dass** die Blockierungsmittel eine Blockierungsplatte (114) umfassen, die zwei Positionen einnehmen kann:
- eine Einbauposition, in der sie in Verschiebung in Bezug auf einen Schaft (131), der mit der Hauptwelle (130) fest verbunden ist, frei ist;
- eine blockierte Position, in der sie in Verschiebung mit dem Schaft (131) verbunden ist.

3. Ladungssicherungsstange (100) nach Anspruch 2, **dadurch gekennzeichnet, dass** die Blockierungsplatte (114) eine Aufnahme aufweist, deren Innenränder mit dem Schaft (131) in der Blockierungsposition in Berührung kommen.

4. Ladungssicherungsstange (100) nach einem der Ansprüche 2 und 3, **dadurch gekennzeichnet, dass** die Verlagerung der Blockierungsplatte (114) zwischen der Einbauposition und der Blockierungsposition von dem Verriegelungsgriff (112) über eine Kraftübertragungswelle (113) gesteuert ist.

5. Ladungssicherungsstange (100) nach einem der Ansprüche 2 bis 4, **dadurch gekennzeichnet, dass** die zweiten Federungsmittel (133, 134) um den Schaft (131) montiert sind.

6. Ladungssicherungsstange (100) nach einem der Ansprüche 2 bis 5, **dadurch gekennzeichnet, dass** die zweiten Federungsmittel (133, 134) zwei Federn umfassen, die sich jeweils auf einer Seite der Blockierungsplatte (114) erstrecken.

7. Ladungssicherungsstange (100) nach einem der Ansprüche 2 bis 6, **dadurch gekennzeichnet, dass** der Verriegelungsgriff (112) in Drehung in Bezug auf eine Achse, die fest mit dem zweiten Stößel (110, 120) verbunden ist, zwischen einer entriegelten Position und einer verriegelten Position beweglich ist und zwei aufeinanderfolgende Funktionen sicherstellt:
- auf einem ersten Winkelbereich: Verlagerung der Platte (114) derart, dass sie in ihre Blockierungsposition platziert wird;
- auf einem zweiten Winkelbereich: Verlagerung in Verschiebung des Schafts, auf dem die Platte (114) blockiert ist, derart, dass die ersten Federungsmittel (142) gespannt werden.

8. Ladungssicherungsstange (100) nach einem der Ansprüche 2 bis 7, **dadurch gekennzeichnet, dass** die Hauptwelle (130) mindestens einen Anschlag (135) trägt, gegen den die Platte (114) bei Abwesenheit von Beanspruchung auf den zweiten Federungsmitteln (133, 134) zum Aufliegen kommt.

9. Ladungssicherungsstange (100) nach Anspruch 8, **dadurch gekennzeichnet, dass** die Anschläge zwei durchgehende Stifte umfassen.

10. Ladungssicherungsstange (100) nach einem der Ansprüche 1 bis 9, **dadurch gekennzeichnet, dass** die ersten und zweiten Federungsmittel (133, 134, 142) koaxial sind und sich jeweils in dem Inneren des ersten und des zweiten Stößels erstrecken.

11. Ladungssicherungsstange (100) nach einem der Ansprüche 1 bis 10, **dadurch gekennzeichnet, dass** die ersten und zweiten Federungsmittel (133, 134, 142) Schraubenfedern umfassen.

12. Ladungssicherungsstange (100) nach einem der Ansprüche 1 bis 11, **dadurch gekennzeichnet, dass** der Anbringungsstößel (110, 120) Mittel zum Voreinstellen seiner Länge umfasst.

13. Ladungssicherungsstange (100) nach den Ansprüchen 1 bis 11, **dadurch gekennzeichnet, dass** sie an jedem ihrer Enden eine rutschsichere Kufe (212, 141) oder einen Ansatz, der dazu bestimmt ist, mit einer Schiene zusammenzuwirken, umfasst.

## Claims

1. Tie-down bar (100) for extending between two bearing surfaces of a vehicle, comprising a main shaft (130) and a locking slide (140) movable in translation relative to said main shaft (130) and associated with first return means (142), so-called hard, and a handle (112) for locking the position of said locking slide (140) relative to said main shaft (130),
**characterised in that** it comprises a second slide, so-called positioning slide (110, 120), movable in translation relative to said main shaft (130) and associated with second return means (133, 134), so-called flexible, the stiffness of said first return means (142) being greater than the stiffness of said second return means (133, 134), and blocking means of the translation of said positioning slide with respect to said main shaft (130), which can take two positions:
- an installation, or unblocked, position in which said second slide (110, 120) can be displaced in translation with respect to said main shaft (130), to allow the positioning of said tie-down bar, by compressing said second return means (133, 134);
- a blocked position, in which said second slide (110, 120) is blocked in translation with respect to said main shaft (130), allowing locking of said tie-down bar, by compressing said first return means (142) under the action of said locking handle (112).

2. Tie-down bar (100) according to claim 1, **characterised in that** said blocking means comprise a blocking plate (114) which can take two positions:
- an installation position, in which it is free in translation relative to a rod (131) fixed to said main shaft (130);
- a blocked position, in which it is linked in translation to said rod (131).

3. Tie-down bar (100) according to claim 2, **characterised in that** said blocking plate (114) has a housing, the inner edges of which come into contact with said rod (131) in said blocking position.

4. Tie-down bar (100) according to either of claims 2 and 3, **characterised in that** the displacement of said blocking plate (114) between said installation and blocking positions is controlled by said locking handle (112), via a force transmission shaft (113).

5. Tie-down bar (100) according to any one of claims 2 to 4, **characterised in that** said second return means (133, 134) are mounted around said rod (131).

6. Tie-down bar (100) according to any one of claims 2 to 5, **characterised in that** said second return means (133, 134) comprise two springs respectively extending on either side of said blocking plate (114).

7. Tie-down bar (100) according to any one of claims 2 to 6, **characterised in that** said locking handle (112) is movable in rotation relative to a spindle fixed to said second slide (110, 120) between an unlocked position and a locked position, and performs two successive functions:
- over a first angular range: displacement of said plate (114) in such a way as to place it in its blocking position;
- over a second angular range: displacement in translation of the rod on which said plate (114) is blocked, in such a way as to tighten said first return means (142).

8. Tie-down bar (100) according to any one of claims 2 to 7, **characterised in that** said main shaft (130) carries at least one stop (135) against which said plate (114) bears, in the absence of strain on said second return means (133, 134) .

9. Tie-down bar (100) according to claim 8, **characterised in that** said stops comprise two through pins.

10. Tie-down bar (100) according to any one of claims 1 to 9, **characterised in that** said first and second return means (133, 134, 142) are coaxial and extend within the first and second slides respectively.

11. Tie-down bar (100) according to any one of claims 1 to 10, **characterised in that** said first and second return means (133, 134, 142) comprise helical springs.

12. Tie-down bar (100) according to any one of claims 1 to 11, **characterised in that** said setting slide (110, 120) comprises pre-setting means of its length.

13. Tie-down bar (100) according to claims 1 to 11, **characterised in that** it carries at each of its ends an anti-slip shoe (212, 141) or a tip for cooperating with a rail.
